(19) Europäisches Patentamt
European Patent Office
Office européen des brevets

(11) **EP 1 620 964 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(21) Anmeldenummer: **04741464.4**

(22) Anmeldetag: **16.04.2004**

(51) Int Cl.:
*H04J 14/02* (2006.01)    *H04B 10/2507* (2013.01)
*H04B 10/293* (2013.01)

(86) Internationale Anmeldenummer:
**PCT/EP2004/050546**

(87) Internationale Veröffentlichungsnummer:
**WO 2004/100414 (18.11.2004 Gazette 2004/47)**

(54) **VERFAHREN ZUR PREEMPHASE EINES OPTISCHEN MULTIPLEXSIGNALS**

METHOD FOR PREEMPHASISING AN OPTICAL MULTIPLEX SIGNAL

PROCEDE DE PREACCENTUATION D'UN SIGNAL MULTIPLEX OPTIQUE

(84) Benannte Vertragsstaaten:
**DE ES FR GB IT**

(30) Priorität: **08.05.2003 DE 10320715**
**25.06.2003 DE 10328622**
**23.09.2003 DE 10344067**

(43) Veröffentlichungstag der Anmeldung:
**01.02.2006 Patentblatt 2006/05**

(73) Patentinhaber: **Xieon Networks S.à r.l.**
**2536 Luxembourg (LU)**

(72) Erfinder:
• **EDER, Christian**
**81373 München (DE)**
• **PEISL, Wolfgang**
**81245 München (DE)**
• **RAPP, Lutz**
**82041 Deisenhofen (DE)**

(74) Vertreter: **Lucke, Andreas et al**
**Boehmert & Boehmert**
**Anwaltspartnerschaft mbB**
**Pettenkoferstrasse 22**
**80336 München (DE)**

(56) Entgegenhaltungen:
EP-A- 1 280 288    EP-A- 1 349 310
EP-A2- 0 543 570    WO-A-02/09299
FR-A- 2 845 841    US-A- 5 790 289
US-A1- 2002 154 356

**Beschreibung**

Die Erfindung betrifft ein Verfahren zur Preemphase eines optischen Multiplexsignals nach dem Oberbegriff des Patentanspruches 1.

Optische Verstärker für breitbandige optische Signale weisen eine Wellenlängenabhängigkeit des Gewinns auf, die durch üblicherweise eingesetzte Glättungsfilter nicht vollständig behoben wird. Bei der WDM- oder DWDM-Übertragungstechnik (WDM = Wavelength Division Multiplex; DWDM = Dense Wavelength Division Multiplex) besteht das optische Signal aus mehreren unterschiedliche Wellenlängen aufweisenden Kanälen, deren Wellenlängenabstände heutzutage unterhalb 100 GHz liegen können. Durch die Wellenlängenabhängigkeit des Gewinns der Verstärker akkumulieren sich Leistungsunterschiede zwischen den einzelnen Kanälen beim Durchlaufen einer optischen, so daß die Kanäle stark unterschiedliche optische Signal-Rauschabstände OSNR (Optical Signal-to-Noise Ratio) und Leistungen an den Empfängern besitzen.

In Punkt-zu-Punkt-Verbindungen wird daher häufig ein unter dem Namen "Preemphase" (Preemphasis im englischen Sprachgebrauch) bekanntes Verfahren zur Nivellierung der Signal-Rauschabstände OSNR-Werte mindestens am Streckenende eingesetzt, das in A. R. Chraplyly, J. A. Nagel and R. W. Tkach: "Equalization in Amplifier WDM Lightwave Transmission Systems", IEEE Photonics Technology Letters, Vol. 4, No. 8, August 1992, pp. 920-922 beschrieben wurde. Dabei werden anhand einer am Streckenende gemessenen OSNR-Verteilung die senderseitigen Kanalleistungen in einem iterativen Verfahren solange nachgeführt, bis sich für alle Kanäle dieselben Signal-Rausachabstände OSNR-Werte am Streckenende ergibt.

Häufig wird zur Bestimmung der Signal-Rauschabstände OSNR die verstärkte spontane Emission ASE (ASE = Amplified Spontaneous Emission) zwischen den Kanälen gemessen und daraus die den Kanälen überlagerte Rauschleistung durch Interpolation berechnet. Dies ist aber nicht mehr möglich, wenn die verstärkte Spontanemission ASE zwischen den Kanälen durch optische Komponenten gedämpft wird. Dies ist z.B. der Fall, wenn weitere Module wie Add-Drop-Module oder Interleaver-Filter in der Übertragungsstrecke geschaltet sind.

Allen gängigen Messmethoden für die OSNR-Verteilung am Streckenende ist gemeinsam, dass sie auf Kanäle im 100 GHz Raster beschränkt sind. Ferner sind die Verfahren in der Regel zu langsam(separate Messungen für Kanalleistungen und Leistungen der verstärkten Spontanemission ASE), um Zeitanforderungen in dynamischen optischen Netzen, z. B. maximal ca. 10 Sekunden für einen Kanalupgrade, gerecht werden zu können.

Aus DE 19848989 ist ein Verfahren zur kanalweisen Einstellung von Sendesignalleistungen bekannt, bei dem bei einer unzulässigen Überschreitung des sendeseitigen Dynamikbereiches eine Kompression der einzelnen Sendesignalleistungen derart erfolgt, dass die Sendesignal-Summenleistung annähernd konstant gehalten wird. Dieses Verfahren wird ebenfalls für eine Überschreitung des empfangseitigen Dynamikbereiches durchgeführt.

Da dieses Verfahren auf gemessenen OSNR-Werten basiert, ergeben sich auch hier die bereits weiter oben beschriebenen Probleme der OSNR-Messung bei kleinen Kanalabständen.

Aufgabe der Erfindung ist es, ein Verfahren anzugeben, das eine schnelle Preemphase eines optischen Multiplexsignals ermöglicht. Das Verfahren sollte sich ebenfalls für eine WDM-Übertragung entlang einer zu definierten optischen Übertragungsstrecke mit beliebig schmalen Kanalabständen eignen.

Eine Lösung der Aufgabe erfolgt hinsichtlich ihres Verfahrensaspekts durch ein Verfahren mit den Merkmalen des Patentanspruches 1.

Ausgehend von einem Verfahren zur Preemphase eines optischen Multiplexsignals, das als Kanäle mehrere Signale unterschiedlicher Wellenlänge aufweist, die von Sendern zu Empfängern übertragen werden, bei dem Leistungen der Signale am Sender eingestellt und am Empfänger gemessen werden, wird erfindungsgemäß eine Ermittlung der Signal-Rauschabstände OSNR am Empfänger nicht mehr benötigt. Dafür wird eine mittlere Leistung der Signale am Sender ermittelt und anschließend werden sendeseitig neue Leistungen der Signale aus aktuellen Leistungen der Signale am Sender und am Empfänger und aus der mittleren Leistung am Sender eingestellt, derart, dass Signal-Rauschabstände am Empfänger annähernd gleich bleiben.

Dieses wird in einer ersten im Folgenden ausführlich erläuterten Näherungslösung erreicht, wenn Leistungsspektren der Kanäle am Sender und am Empfänger ca. inverse Funktionen bilden. Eine präzisere und ausreichende Erzielung gleicher Signal-Rauschabstände am Empfänger einer Übertragungsstrecke wird ebenfalls in Anbetracht einer Wellenlängenabhängigkeit von Rauschzahlen, Gewinnen und Dämpfungen definiert werden.

Aus der EP 1 130 803 A2 ist ein Verfahren zur Preemphase bekannt, bei dem Pegel von optischen Signalen auf Basis einer vorbestimmten physikalischen Größe, die außer an der Empfangsstation noch an Zwischenstationen erhalten wird, reguliert werden. Die physikalische Größe kann dabei aus den folgenden Größen bestehen:

- optische Ausgangsleistung, Rauschzahl und Gewinn,
- optische Eingangsleistung und Rauschzahl,
- optische Ausgangsleistung und Gewinn, oder
- optische Ausgangsleistung.

Mithilfe der physikalischen Größe wird ein partielles Signal-Rausch-Verhältnis ermittelt, das für die Regelung verwendet wird.

Die EP 0543570 A2 offenbart eine Signalverarbeitungsvorrichtung, die folgendes umfasst: Mittel zum Kombinieren wenigstens zweier Kanäle eines optischen Signals mit unterschiedlichen Frequenzen, um ein WDM-Signal zu erhalten, einen Empfänger zum Empfangen des WDM-Signals und zum Auftrennen desselben in die einzelnen Kanalsignale und eine Vorrichtung zum Messen des Signal-Rauschverhältnisses (SNR) für einen jeden Kanal. In Kenntnis der SNR-Werte für jeden Kanal wird die Leistung am Sender nach der folgenden Vorschrift berechnet:

$$ P_{new}^i = P_{TOT} \left[ \frac{P^i/(S/N)_i}{\sum_{i=1}^{T} P^i/(S/N)_i} \right] $$

wobei $P_{new}$ das neue Inputsignal für den i-ten Kanal ist, $(S/N)i$ das SNR des i-ten Kanals ist, $P_{TOT}$ die Gesamtleistung des Signals und T die Anzahl an Kanälen ist.

Der wesentliche Vorteil der Erfindung ist, dass keine Messung der Signal-Rauschabstände bzw. der Rauschleistungen sondern nur Pegelmessungen von Signalen am Sender und am Empfänger erforderlich sind. Aufgrund der Messung und Neueinstellung der Leistungen an einem Sender mittels einer einfachen Messung von Signalleistungen am einem Empfänger erfolgt die Preemphase gemäß erfindungsgemäßer Regelformel weit schneller als eine auf Signal-Rausch-Abständen OSNR basierte Preemphase. Damit werden auch systembedingte und daher aufwendige Messung von Rauschleistungen der Signale nicht mehr benötigt.

Das Einstellen der inversen Funktion zwischen Leistungsspektren führt in sehr guter Näherung zu identischen Signal-Rauschabständen OSNR für alle Kanäle. Bei einem Übertragungssystem kann eine tolerierte Abweichung bzw. Verschlechterung im voraus definiert werden, d. h. die Signal-Rauschabständen OSNR müssen sich bei der Preemphase derart ändern, dass keine Übertragungsfehler auftreten. Auf der Basis einer zugelassenen Balance bzw. eines tolerierten Intervalls der Signal-Rauschabstände OSNR ergibt sich eine einfache erfindungsgemäße Regelformel zur Preemphase, die eine Neueinstellung der Signalleistungen am Sender ohne Ermittlung der aktuellen Signal-Rauschabständen OSNR darstellt.

Ein weiterer Vorteil des erfindungsgemäßen Verfahrens ist darin zu sehen, dass eine komplizierte Messung von Rauschleistungen zwischen den Kanälen oder gar eine direkte und technisch sehr aufwendige Messung der den Kanälen überlagerten verstärkten spontanen Emission ASE zur Ermittlung der Signal-Rauschabstände OSNR entfällt. Das Verfahren eignet sich also bestens für beliebige kleine Wellenlängenabstände der Kanäle.

Selbstverständlich ist es möglich, dieses Verfahren mit einer anschließenden Preemphase zu kombinieren, die auf einer Messung des Signal-Rauschabstandes OSNR basiert und die zu einer optimalen Einstellung der Kanalleistungen am Sender führt. Dass hierzu wesentlich mehr Zeit erforderlich ist, hat keine negativen Auswirkungen auf die Übertragungsqualität. Das erfindungsgemäße Verfahren erfordert jedoch keine solche bekannte Preemphase mehr, um die annähernd gleichen Erfordernissen zu erfüllen. Dieser vorteilhafte Aspekt wurde theoretisch und experimentell im Labor nachgewiesen. Damit werden kostenverbundene spektral auflösende Messinstrumente wie optische Spektrumanalysatoren eingespart.

Ein wesentlicher Vorteil der Erfindung besteht ebenfalls darin, dass das beschriebene Verfahren gegen eine vorhandene Verkippung oder gegen eine weitere vorhandene ungleichmäßige spektralen Verteilung der Leistungen und/oder der Signal-Rauschabstände OSNR am Sender unempfindlich ist.

In der gesamten Erfindung werden die Ausdrücke "Sender" und "Empfänger" aus Gründen der einfachen Darstellung verwendet. Es sollte hier klargestellt werden, dass diese Ausdrücke jede Stelle einer Übertragungsstrecke bezeichnen, an denen die erfindungsgemäße Preemphase durchführbar ist, d. h. z. B. an optischen Verstärkern, an Multiplexern und Demultiplexern, an spektral regelbaren Filtern, etc. Dazu müssen mindestens bei einer "Sender"-Stelle ein erstes für das Leistungsspektrum vorgesehenes Regel- und Messmodul und bei einer "Empfänger"-Stelle ein zweites für das Leistungsspektrum vorgesehenes Messmodul vorhanden werden.

Zur Durchführung des erfindungsgemäßen Verfahrens zur Preemphase wird eine einfache geeignete optische Übertragungsstrecke angegeben. Diese Übertragungsstrecke könnte Teil eines aufwendigeren optischen Netzwerks sein.

Vorteilhafte Weiterbildungen der Erfindung sind in den Unteransprüchen angegeben.

Ausführungsbeispiele der Erfindung werden im folgenden anhand der Zeichnung näher erläutert.

Dabei zeigen:

Fig. 1: Leistungsspektren der Kanäle am Sender und am Empfänger vor und nach der Preemphase,

Fig. 2: Spektren der Signal-Rauschabstände OSNR der Kanäle am Sender und am Empfänger vor der Preemphase und am Sender nach der Preemphase,

Fig. 3: eine optische Übertragungsstrecke zur Durchführung der erfindungsgemäßen Preemphase.

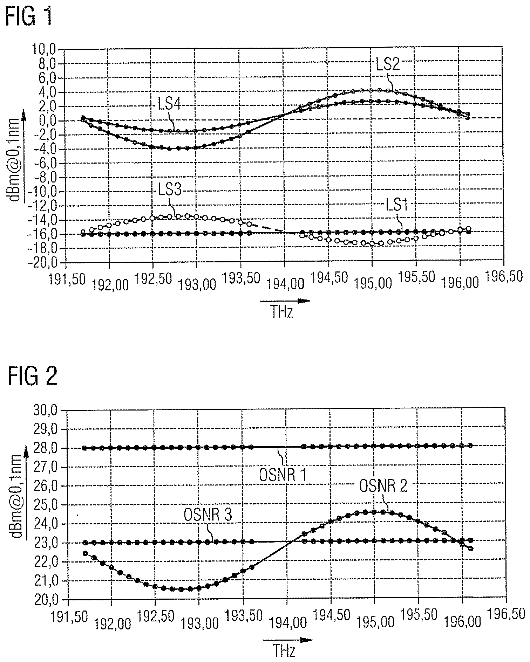

In **Fig. 1** sind Leistungsspektren LS1, LS2, LS3, LS4 der Kanäle am Sender und am Empfänger vor und nach der Preemphase für ein optisches DWDM-Signal mit 80 Kanälen (Frequenzabstand = 50 GHz) dargestellt. Vor der Preemphase ist das gemessene Signalleistungsspektrum LS1 am Sender bei einem mittleren Leistungswert von -16 dBm konstant. Das gemessene Signalleistungsspektrum LS2 am Empfänger weist dagegen ein beliebiges Profil auf, wobei die Kanäle Leistungsunterschiede von bis zu 8dB aufweisen. Die Abweichung kann sowohl eine lineare Funktion der Wellenlänge wie bei einer Verkippung oder im allgemein eine nichtlineare Funktion der Wellenlänge darstellen.

Gemäß der zugelassenen Balance der Signal-Rauschabstände OSNR am Empfänger wird nun die Preemphase mittels der Invertierung des Signalleistungsspektrums LS1 am Sender durchgeführt. Eine Regelformel der Invertierung wird im folgenden Text angegeben. Somit ergeben sich zwei neue Signalleistungsspektren LS3 am Sender und LS4 am Empfänger. Die Signal-Rauschabstände OSNR am Empfänger bilden nun ein flaches Spektrum.

In **Fig.2** sind Spektren OSNR1, OSNR2 der Signal-Rauschabstände OSNR der Kanäle am Sender und am Empfänger vor der Preemphase sowie ein Spektrum OSNR3 der Signal-Rauschabstände OSNR der Kanäle am Empfänger nach der Preemphase für das optische Signal gemäß Fig. 1 dargestellt.

Vor der Preemphase ist das für das Experiment hier gemessene Spektrum OSNR1 am Sender bei einem mittleren Wert von 28 dB konstant. Das Spektrum OSNR2 am Empfänger weist dagegen ein beliebiges Profil auf, das von einem mittleren Wert bei ca. 23 dB abweicht. Die Abweichung kann sowohl eine lineare Funktion der Wellenlänge wie bei einer Verkippung oder im allgemein eine nichtlineare Funktion der Wellenlänge darstellen. Nach der Preemphase ist das Spektrum OSNR3 am Empfänger flach.

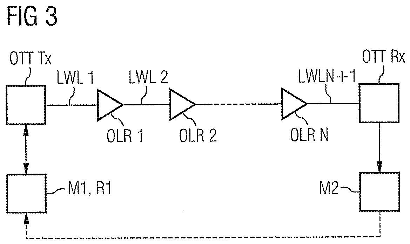

**Fig. 3** zeigt eine optische Übertragungsstrecke mit zwischen Sender OTT Tx und Empfänger OTT Rx liegenden frequenzabhängigen Elementen - hier Zwischenverstärker OLR1, OLR2, ..., optische Lichtwellenleiter LWL1, LWL2, ..., etc - zur Durchführung des erfindungsgemäßen Verfahrens zur Preemphase. Eine Leistungsmesseinrichtungen M1, M2 ist jeweils an dem Sender OTT Tx und dem Empfänger OTT Rx und eine Leistungsregeleinrichtung R1 an dem Sender OTT Tx angeschlossen, die lediglich Pegel der übertragenen Signale sendeseitig und empfangsseitig messen bzw. sendeseitig regeln.

Im folgenden wird eine mathematische Beschreibung des in den Fig. 1 und 2 dargestellten Verfahrens angegeben, wobei angenommen wird, dass das übertragene Multiplexsignale die Bandbreite $\Delta\lambda$ belege.

Folgende Bezeichnungen werden hierfür verwendet:

| | |
|---|---|
| Sender: | OTT Tx |
| Empfänger: | OTT Rx |
| Kanal (Wellenlänge): | $\lambda = \lambda\min, ..., \lambda\max$ |
| Bandbreite: | $\Delta\lambda = \lambda\max - \lambda\min$ |
| Kanalleistungen am OTT Tx: | $P_{IN}(\lambda)$ {in mW} |
| Kanalleistungen am OTT Rx: | $P_{OUT}(\lambda)$ {in mW} |
| Mittlere Eingangsleistung: | $< P_{IN} > = \dfrac{1}{\Delta\lambda} \cdot \int_{\Delta\lambda} P_{IN}(\lambda)\, d\lambda$ {in mW} |
| Mittlere Ausgangsleistung: | $< P_{OUT} > = \dfrac{1}{\Delta\lambda} \cdot \int_{\Delta\lambda} P_{OUT}(\lambda)\, d\lambda$ {in mW} |

Allgemein wird der Mittelwert - hier über einem Wellenlängenbereich - eines Wertes X durch die Schreibweise < X > zwischen eckigen Klammern < X > signalisiert.

Die Summeneingangsleistung der Kanäle mit den Wellenlängen $\lambda = \lambda\min, ..., \lambda\max$ wird am Sender OTT Tx konstant gehalten. Neue, am Sender OTT Tx einzustellende Kanalleistungen $P_{IN}(\lambda)\_new$ (linear in mW), unter Beibehaltung der bestehenden Summeneingangsleistung ($=\Delta\lambda\cdot < P_{IN} >$) mittels einer Funktion $Q(\lambda)$ lauten daher:

$$P_{IN}(\lambda)\_new := < P_{IN} > \cdot \frac{Q(\lambda)}{\dfrac{1}{\Delta\lambda} \cdot \int_{\Delta\lambda} Q(\lambda) d\lambda}$$

Eine zugelassene Balance der Signal-Rauschabstände OSNR wird durch den im folgenden begründeten Ansatz

$$\sqrt{P_{IN}(\lambda) \cdot P_{OUT}(\lambda)} = const \ (d.\ h.\ Konstante)$$

angenähert, womit sich für die Funktion Q(λ) ergibt:

$$Q(\lambda) = \frac{P_{IN}(\lambda)}{\sqrt{P_{IN}(\lambda) \cdot P_{OUT}(\lambda)}} = \sqrt{\frac{P_{IN}(\lambda)}{P_{OUT}(\lambda)}}$$

Diese Gleichung zeigt, dass die Funktion Q der Quadratwurzel der Übertragungsfunktion der Signale entspricht.

Damit lassen sich sehr schnell die neu einzustellenden Eingangsleistungen $P_{IN}(\lambda)$_new für jeden Kanal mittels der mittleren Eingangsleistung und der vorhandenen bzw. neu gemessenen Eingang- und Ausgangsleistungen $P_{IN}(\lambda)$ und $P_{OUT}(\lambda)$ neu einstellen. Es werden dadurch keine Messungen der Signal-Rauschabstände OSNR oder von Rauschleistungen benötigt.

Im geeigneten Fall erfolgt die Neueinstellung durch eine einfache Invertierung zwischen Leistungsspektren des Senders und des Empfängers.

Ferner wird nun eine präzisere Herleitung des neu einzustellenden Leistungsspektrums $P_{IN}(\lambda)$_new bei einer Berücksichtigung wellenlängenabhängiger Rauschzahlen Fi(λ) (i=0,...,N) eines oder mehrerer entlang der Übertragungsstrecke angeordneten optischen Verstärkern V0, V1, ..., VN angegeben. Diese Herleitung zeigt, inwieweit sich die erfindungsgemäße Preemphase im Hinblick auf erforderliche Übertragungstoleranzen für den Einsatz in Übertragungssystemen eignet. Außerdem ergeben sich daraus auch Varianten des Verfahren, die eine höhere Genauigkeit erreichen, jedoch die Kenntnis zusätzlicher Parameter voraussetzen, die entweder direkt am System oder aber bereits bei der Produktion gemessen werden können. Alternativ können auch typische Werte verwendet werden.

Es wird gezeigt, dass trotz Einflüssen der Rauschzahl Fi(λ) die erfindungsgemäße Preemphase für eine Anzahl von N+1 kaskadierten optischen Verstärkern Vi mit N zwischengeschalteten optischen Leitungen OLi (i=1, ..., N) mit Dämpfungen Ai eine tolerierbare Einebnung der Signal-Rauschabstände OSNR am Ende der Übertragungsstrecke ermöglicht. Falls weitere präzisere Erfüllungen benötigt sind, können auch die Rauschzahlen Fi(λ) berücksichtigt werden, z. B. durch die technischen Lieferungsangaben eines optischen Verstärkers.

Der Gewinn Gi(λ) eines der optischen Verstärker Vi (i=0,..., N) sei gegeben durch:

$$Gi(\lambda) = <Gi> \cdot g(\lambda)$$

wobei < Gi > einen mittleren Gewinn und g(λ) eine normierte spektrale Abhängigkeitsfunktion des Gewinns Gi(A) bezeichnen.

Genauso lassen sich die Dämpfung Ai(λ) der optischen Leitungen OLi und die Rauschzahl Fi(λ) beschreiben:

$$Ai(\lambda) = <Ai> \cdot a(\lambda)$$

$$Fi(\lambda) = <Fi> \cdot f(\lambda)$$

Zur Vereinfachung der Darstellung wurde davon ausgenommen, dass die Wellenlängenabhängigkeiten a(λ) und f(λ) der Dämpfung Ai(λ) und der Rauschzahl Fi(λ) für alle Verstärker und zwischengeschalteten Fasern annähernd identisch sind.

Am Ende der Übertragungsstrecke OTT Rx sind die Ausgangsleitungen $P_{OUT}(\lambda)$ als Funktion der Wellenlänge λ so definiert:

$$P_{OUT}(\lambda) = \prod_{i=1}^{N} Ai(\lambda) \cdot \prod_{i=0}^{N} Gi(\lambda) \cdot P_{IN}(\lambda) = P_{IN}(\lambda) \cdot G0 \cdot \prod_{i=1}^{N} Ai(\lambda) \cdot Gi(\lambda)$$

wobei G0 der Gewinn des sendeseitig als Booster eingesetzten ersten optischen Verstärkers V0 ist. Bei den optischen Verstärkern Vi tritt verstärkte spontane Emission ASE auf, die für einen die Wellenlänge λ aufweisenden Kanal eines breitbandigen optischen Signals zu einer Rauschleistungsanteil $P_{ASE}(i, \lambda)$ führt.

$$P_{ASE}(i, \lambda) = h\nu \cdot B_0 \cdot \left[ Fi(\lambda) \cdot Gi(\lambda) - 1 \right]$$

In dieser Gleichung repräsentierten h die Planck'sche Konstant, $v$ die Frequenz des betrachteten Kanals und $B_0$ die Messbandbreite.

Am Sender OTT Tx und am Empfänger OTT Rx der kompletten Übertragungstrecke V0, LWL1, V1, LWL2, ..., LWLN, VN weist ein Kanal bei der Wellenlänge $\lambda$ mit Eingangsleitung $P_{IN}(\lambda)$ und Ausgangsleitung $P_{OUT}(\lambda)$ eine akkumulierte Rauschleistung $P_{ASE}(\lambda)$ auf, die sich wie folgt errechnen lässt:

$$P_{ASE}(\lambda) = h v \cdot B_0 \cdot \left\{ \sum_{j=0}^{N} \left[ F_j(\lambda) \cdot G_j(\lambda) - 1 \right] \cdot \prod_{i=j+1}^{N} A_i(\lambda) \cdot G_i(\lambda) \right\}$$

Die wellenlängenabhängigen Signal-Rauschabstände OSNR am Sender OTT Tx sind so definiert:

$$OSNR = \frac{P_{OUT}(\lambda)}{P_{ASE}(\lambda)}$$

Der Ansatz zur Balance der Signal-Rauschabstände OSNR basiert auf einer Einebnung derselben am Sender OTT Tx. Dies lässt sich durch die folgende Bedingung (const= Konstante) realisieren:

$$\frac{1}{OSNR} = \frac{h v B_0}{P_{IN}(\lambda)} \cdot \frac{\sum_{j=0}^{N} \left[ F_j(\lambda) \cdot G_j(\lambda) - 1 \right] \cdot \prod_{i=j+1}^{N} A_i(\lambda) \cdot G_i(\lambda)}{G0 \cdot \prod_{i=1}^{N} A_i(\lambda) \cdot G_i(\lambda)} \overset{!}{=} const$$

Durch die Definition der schon bekannten Funktion $Q(\lambda)$ nun als:

$$Q(\lambda) = \frac{\sum_{j=0}^{N} \left[ F_j(\lambda) \cdot G_j(\lambda) - 1 \right] \cdot \prod_{i=j+1}^{N} A_i(\lambda) \cdot G_i(\lambda)}{\lambda \cdot G0 \cdot \prod_{i=1}^{N} A_i(\lambda) \cdot G_i(\lambda)}$$

lässt sich diese Bedingung für identische Signal-Rauschabstände OSNR aller Kanäle am Empfänger OTT Rx wie folgt formulieren:

$$P_{IN}(\lambda)\_new := < P_{IN} > \cdot \frac{Q(\lambda)}{< Q(\lambda) >} \qquad mit < Q(\lambda) >= \frac{1}{\Delta\lambda} \int_{\Delta\lambda} Q(\lambda) d\lambda$$

Diese Gleichung beschreibt die neu einzustellenden Kanalleistungen sehr genau, erfordert aber die Kenntnis zahlreicher Parameter. Im folgenden wird daher der Einfluß verschiedener Parameter wie die Rauschzahlen $F_i(\lambda)$, die Gewinne $G_i(\lambda)$ und die Dämpfungen $A_i(\lambda)$ auf die Wellenlängenabhängigkeit der Funktion $Q(\lambda)$ betrachtet. Zunächst wird dieser Aspekt mittels eines Ausführungsbeispiels für eine Übertragungstrecke mit N+1 optischen Verstärkern und mit N den optischen Verstärkern zwischengeschalteten optischen Leitungen OLi beschrieben, bei dem ein breitbandiges optisches Signal mit mehreren Kanälen vom dem Sender OTT Tx bis zum Empfänger OTT Rx übertragen wird.

In der Regel werden die Gewinne der Verstärker Vi so eingestellt, dass sie die Dämpfungsverluste in den nachfolgenden Streckenabschnitten OLi ("span" in englisch) kompensieren, so dass

$$< G_i(\lambda) > = \frac{1}{< A_i(\lambda) >} \quad gilt.$$

Damit lässt sich die Funktion $Q(\lambda)$ wie folgt beschreiben:

$$Q(\lambda) = \frac{\sum_{j=0}^{N} \left[ <F_j> \cdot <G_j> \cdot f_j(\lambda) \cdot g_j(\lambda) - 1 \right] \cdot \prod_{i=j+1}^{N} a_i(\lambda) \cdot g_i(\lambda)}{\lambda \cdot <G_0> \cdot g_0 \cdot \prod_{i=1}^{N} a_i(\lambda) \cdot g_i(\lambda)}$$

Ausgehend von aus der Praxis bekannten Werten wie z. B. $<F_j> \cong 2$ und $<G_j> \cong 100$ ist es implizit, dass:

$$<F_j> \cdot <G_j> \cdot f_j(\lambda) \cdot g_j(\lambda) \gg 1$$

Ferner wird angenommen, dass die optischen Verstärker $V_i$ sowie die optischen Leitungen $OL_i$ quasi-identisch sind. Diese Annahme ist in der Regel erfüllt, da im Bezug auf Gewinn und Dämpfung kritische technische Eigenschafts- abweichungen der Komponenten $V_i$, $OL_i$ bei ihrer Herstellung bzw. bei der Installation eines Netzwerks möglichst minimiert bzw. optimiert werden und die Wellenlängenabhängigkeit des Gewinns optischer Verstärker nahezu unabhängig vom eingestellten Gewinn ist. Somit werden nun einzelne Mittelwerte und einzelne spektrale Abhängigkeitsfunktionen der Rauschzahl $<F> = <F_i>$, $f(\lambda) = f_i(\lambda)$, des Gewinns $<G> = <G_i>$, $g(\lambda) = g_i(\lambda)$ und der Dämpfung $<A> = <A_i>$, $a(\lambda) = a_i(\lambda)$ für alle Komponente $V_i$, $OL_i$ verwendet, was zu einer einfacheren neuen Form der Funktion $Q(\lambda)$ führt:

$$Q(\lambda) = \frac{<F> \cdot f(\lambda) \cdot}{\lambda} \cdot \frac{[a(\lambda) \cdot g(\lambda)]^{N+1} - 1}{[a(\lambda) \cdot g(\lambda)]^{N} \cdot [a(\lambda) \cdot g(\lambda) - 1]}$$

Diese Gleichung führt auf die Approximation

$$\frac{Q(\lambda)}{<Q(\lambda)>} \propto \frac{f(\lambda)}{\lambda} \cdot \frac{1}{N+1} \cdot \frac{[a(\lambda) \cdot g(\lambda)]^{N+1} - 1}{[a(\lambda) \cdot g(\lambda)]^{N} \cdot [a(\lambda) \cdot g(\lambda) - 1]} \cdot$$

Diese letzte Funktion berücksichtigt die spektrale Welligkeit (Ripples in Englisch) der Rauschzahl, des Gewinns und der Dämpfung über einer gewünschten Bandbreite im Wellenlängenbereich $\Delta\lambda$.
Mittels der Messung des Leistungsspektrums bzw. des Gesamtgewinns $G_{LINK} = [a(\lambda) g(\lambda)]^{N+1}$ am Empfänger OTT Rx erhält man:

$$\frac{Q(\lambda)}{<Q(\lambda)>} \propto \frac{f(\lambda)}{\lambda} \cdot \frac{1}{N+1} \cdot \frac{G_{LINK} - 1}{G_{LINK}^{\frac{N}{N+1}} \cdot \left[ G_{LINK}^{\frac{1}{N+1}} - 1 \right]}$$

Bei Kenntnis oder Abschätzung der Rauschzahl $f(\lambda)$ aus einer oder mehrerer optischen Verstärkungen in der Übertragungsstrecke ist also die Funktion $Q(\lambda) / <Q(\lambda)>$ wellenlängenabhängig ermittelbar. Die Preemphase ist in diesem Fall also mehr als nur eine einfache Invertierung der Leistungsspektren zwischen Empfänger und Sender, beruht jedoch immer noch nur auf Signalleistungsmessungen bzw. Leistungseinstellungen.
Anders formuliert, wenn die Wellenlängenabhängigkeit der Rauschzahl $F(i)$ der optischen Verstärker bekannt ist (analytisch oder in Tabellenform), so kann diese Abhängigkeit bei der Preemphase genauer als mittels der bisher erwähnten Invertierung der Leistungsspektren berücksichtigt werden.
Als konkrete Wertebereiche für eine praktische Anwendung ist:

$$1 \leq N \leq 20$$
$$-0{,}7 \text{ dB} \leq 10 \log[g(\lambda)] \leq 0{,}7 \text{ dB}$$

von Interesse, da heutzutage typische Verstärker wie EDFAs (Erbium Doped Fiber Amplifiers) Gewinnwelligkeiten unterhalb 1,4 dB aufweisen.

Für diese Wertebereiche kann die Funktion Q($\lambda$)/<Q($\lambda$)> durch $1/\sqrt{G_{LINK}}$ gut angenähert werden. Dadurch wird die Preemphase unabhängig von der Zahl N der Übertragungsabschnitte Vi, OLi (span) erfolgen.

Diese Annäherung bestätigt wiederum die bisher erläuterte Behauptung, dass mit den beiden folgenden Gleichungen:

$$P_{IN}(\lambda)\_new := <P_{IN}> \cdot \frac{Q(\lambda)}{<Q(\lambda)>} \{in\ mW\} \qquad mit\ <Q(\lambda)> = <\sqrt{\frac{P_{IN}}{P_{OUT}}}>$$

und :

$$G_{LINK} = \frac{P_{OUT}}{P_{IN}}$$

die neu einzustellenden Leistungen $P_{IN}(\lambda)$\_new am Sender OTT Tx bei der Preemphase wie folgt errechnet werden:

$$P_{IN}(\lambda)\_new := <P_{IN}> \cdot \sqrt{\frac{P_{IN}}{P_{OUT}}} \cdot \frac{1}{\left\langle \sqrt{\frac{P_{IN}}{P_{OUT}}} \right\rangle}$$

In diesem Fall beruht die Preemphase auf der einfachen Invertierung der Leistungsspektren am Sender OTT Tx und am Empfänger OTT Rx.

Wenn eine zusätzliche Leistungseinstellung der Kanäle am Sender OTT Rx vorgesehen ist, ist auch die Preemphase in einer bidirektionalen Weise steuerbar. Dadurch weisen die Signal-Rauschabstände OSNR am Empfänger OTT Rx und am Sender OTT Tx ein flaches Spektrum auf.

Weitere Ausführungsbeispiele der Erfindung werden im folgenden anhand der Zeichnung näher erläutert.

Dabei zeigen:

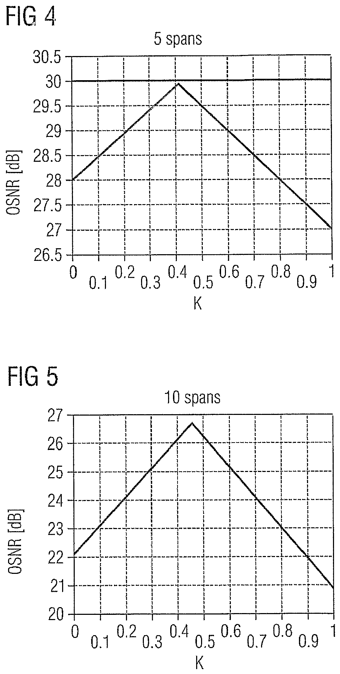

Fig. 4:  Kleinster auftretender Signal-Rauschabstand als Funktion eines Parameters k bei 5 Übertragungsabschnitten,

Fig. 5:  Kleinster auftretender Signal-Rauschabstand als Funktion des Parameters k bei 10 Übertragungsabschnitten,

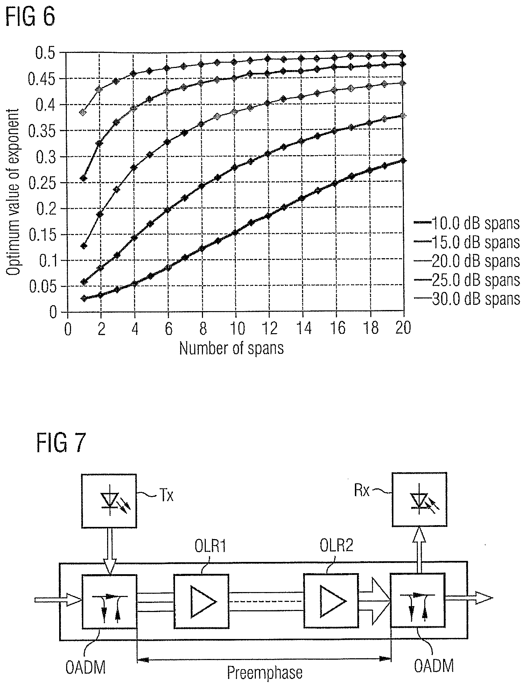

Fig. 6:  optimale Werte des Parameters k für unterschiedliche Streckendämpfungen als Funktion der Anzahl an Streckenabschnitten,

Fig. 7:  eine Teilstrecke eines optischen Netzwerks.

Nun wird von einem Verfahren ausgegangen, bei dem zunächst für eine beliebige Kanalleistungsverteilung $P_{IN}(\lambda)$ am Linkeingang die entsprechende Kanalleistungsverteilung $P_{OUT}(\lambda)$ am Linkausgang gemessen wird. In einem zweiten Schritt werden Eingangsleistungen nach der Vorschrift:

$$P_{IN}(\lambda)\_new = <P_{IN}> \cdot ((P_{IN}/P_{OUT})^{0.5})\ /<((P_{IN}/P_{OUT})^{0.5})>$$

eingestellt, wobei $P_{IN}(\lambda)$ und $P_{OUT}(\lambda)$ mit $P_{IN}$ bzw. $P_{OUT}$ dargestellt sind. Damit lassen sich annähernd identische Werte der Signal-Rauschabstände OSNR für alle Kanäle erzielen, aber dennoch ergeben sich Abweichungen zu einer reinen OSNR-Preemphase.

Im folgenden wird gezeigt, dass sich die Größe dieser Abweichungen durch Einführung eines variablen Exponenten k mit Werten im Bereich von 0 bis 1 - im Vergleich zu 0,5 in der oberen Gleichung - deutlich reduzieren lässt, so dass das Verfahren näher an die optimalen Ergebnisse einer SNR-Preemphasis herankommt. Die Leistungen am Sender OTT Rx werden nun nach der Vorschrift

$$P_{IN}(\lambda)\_new = <P_{IN}> \cdot ((P_{IN}/P_{OUT})^k)\ /<((P_{IN}/P_{OUT})^k)>$$

eingestellt. Da sich die Übertragungsfunktion des Links beim Veränderung des Eingangsspektrums verändern kann, bietet es sich an, dieses Verfahren mehrmals anzuwenden.

Es stellt sich nun die Aufgabe, eine optimale Einstellung des Exponenten k zu bestimmen. Die beiden folgenden **Figuren 4 und 5** zeigen die minimal auftretenden Signal-Rauschabstände OSNR (in dB) als Funktion des Exponenten k für ein Link mit 5 und 10 Abschnitten LWL1, LWL2, etc gemäß Figur 3. Die Abschnittdämpfung beträgt dabei jeweils 20dB. Dabei ist ein Optimum (hier ca. 0,4 bei 5 Abschnitten und ca. 0,45 bei 10 Abschnitten) des Exponenten k deutlich zu erkennen, damit die Signal-Rauschabstände OSNR maximale Werte aufweisen.

Die nun folgende **Figur 6** zeigt - für eine geänderte mittlere Eingangsleistung am Sender OTT Tx - den optimalen Wert des Exponenten k<1 als Funktion der Anzahl (1 bis 20) an Abschnitten LWL1, LWL2, etc für verschiedene Abschnittsdämpfungen (10dB, 15 dB, 20 dB, 25 dB, 30 dB). Dabei wird auch deutlich, dass neben der Abschnittsdämpfung und der Anzahl an Abschnitten auch die Leistung am Sendereingang einen wesentlichen Einfluß auf den optimalen Wert des Exponenten k hat. Solange die Wellenlängen-Abhängigkeit der Rauschzahl der optischen Verstärker OLR1, OLR2, etc gemäß Figur 3 klein gegenüber der Wellenlängen-Abhängigkeit der GewinnÜbertragungsfunktion der selben optischen Verstärker ist, können auftretende Abweichungen zu einer reinen Preemphase der Signal-Rauschabstände OSNR durch die optimale Wahl des Exponenten k minimiert werden.

Zur Optimierung des Exponenten k gibt es mehrere Möglichkeiten, die auf dem Formelwerk der entsprechenden Patentanmeldung aufbauen:

- Bevor eine Übertragungsstrecke OTT Tx, LWL1, OLR1, LWL2, OLR2, ..., OTT_Rx (link) aufgebaut wird, kommt ein Planungstool zum Einsatz. Dieses kennt typische Werte der charakteristischen Parameter aller optischen Komponenten und kann somit den sich ergebenden Signal-Rauschabstand OSNR sowie denjenigen Parameterwert von k ermitteln, mit dem das rein auf Leistungsmessungen basierende Verfahren der idealen OSNR-Preemphase möglichst nahe kommt.

- Die eingesetzten Baugruppen werden bei der Produktion vermessen und stellen diese Werte, wenn sie im System eingebaut sind, dem Management-System zur Verfügung, das dann wiederum den optimalen Parameterwert bestimmen kann.

- Die einzelnen Empfängerbaugruppen teilen die gemessenen Bitfehlerhäufigkeiten dem Management-System mit. Dieses benutzt dieses Information zur Bestimmung des optimalen Werte des Exponenten k.

- Bei Installation einer Übertragungsstrecke wird diese zunächst mit wenigen Kanälen betrieben, so dass eine Messung der Signal-Rauschabstände OSNR möglich ist und eine reine OSNR-Preemphase durchgeführt werden kann. Daraufhin wird derjenige Parameter-Wert von k bestimmt, der das sich dabei einstellende Eingangsspektrum möglichst gut approximiert. Dieser Wert wird dann in Zukunft für eine beliebige Anzahl an Kanälen und auch bei Komponententausch weiterverwendet.

Zusammengefasst ermöglicht die Einführung eines variablen Exponenten k eine Reduktion der Abweichungen zwischen einem leistungsbasierten Verfahren und der Signal-Rauschabständen basierten Preemphase.

Im bisherigen Beschreibungsteil der Erfindung wurde eine Punkt-zu-Punkt-Übertragungsstrecke für die Ausführungsbeispiele dargestellt. Das Verfahren zur Preemphase eines optischen Multiplexsignals eignet sich jedoch auch für ein komplettes Netzwerk mit mehreren Netzknoten, zwischen denen optische Punkt-zu-Punkt-Verbindungen angeordnet sind.

Die **Figur 7** zeigt eine Teilstrecke eines optischen Netzwerkes, für die eine Preemphase durchzuführen ist. An den jeweils am Ende angebrachten Netzknoten (dargestellt hier als Add-Drop-Module OADM) werden Signale eingekoppelt bzw. ausgekoppelt. Die eingekoppelten Signale können entweder von einer anderen Übertragungsstrecke her kommen oder aber direkt von sich an der Stelle des Add-Drop-Moduls OADM befindenden Sendern Tx stammen. Am Ende der Teilstrecke wird ein Teil der Kanäle einer weiteren Übertragungsstrecke zugeführt, während der andere Teil dort zum Beispiel am einem Empfänger Rx terminiert wird.

Eingangsseitig am ersten Add-Drop-Modul OADM1 besitzen die Kanäle unterschiedliche Signal-Rauschabstände-Werte $OSNR_{IN}$. Da ein Teil der Kanäle noch weitere Übertragungsstrecken durchlaufen muß und die Empfänger unterschiedliche Charakteristika aufweisen können (z. B. aufgrund unterschiedlicher Datenraten), macht es Sinn, unterschiedliche Anforderungen der Signal-Rauschabstände $OSNR^{OUT}$ am Ausgang der Übertragungsstrecke zu stellen. Die aufgrund von dieser Anforderung gewünschte Wellenlängenabhängigkeit des ausgangsseitigen Signal-Rauschabstandes $OSNR_{OUT}$ sei durch die Funktion h mit Mittelwert 1 gegeben, die mit dem Kehrwert einer noch zu bestimmenden Konstante $\alpha$ zum resultierenden Signal-Rauschabstand $OSNR^{OUT}$ zu multiplizieren ist. Die wellenlängenabhängige Funktion $h(\lambda)$ wird von einem Netzplanungstool vorgegeben. Diese Wahl wird durch eine Verkehrsmatrix innerhalb des optischen Netzes bestimmt. Außerdem sei der bisher beschriebene Exponent k bekannt.

Die am Eingang der Teilstrecke einzustellende Leistungsverteilung ergibt sich damit zu

$$P_{IN}(\lambda)\_new = \langle P_{IN} \rangle \cdot \frac{G(\lambda)^{-k}}{\langle G(\lambda)^{-k} \rangle} \cdot \underbrace{\frac{OSNR^{IN}(\lambda)}{OSNR^{PP}}}_{BII} \cdot \underbrace{\frac{h(\lambda)}{OSNR^{IN}(\lambda) \cdot \alpha - h(\lambda)}}_{BIII},$$

wobei OSNR$^{PP}$ für denjenigen konstanten Signal-Rauschabstand OSNR steht, das sich beim Stand-alone-Betrieb der Übertragungsstrecke im Netzwerk ergeben würde, und G($\lambda$) den wellenlängenabhängigen Gewinn der betrachteten Übertragungsstrecke bezeichnet. Der Parameter $\alpha$ ist so zu wählen, dass die mittlere Leistung <P$_{IN}$> der Kanäle am Eingang unverändert bleibt. Er kann z. B. mit Hilfe einer iterativen Methode auf dem Rechner bestimmt werden.

In die oben angegebene Gleichung gehen neben der zu messenden Gewinnübertragungsfunktion der Teilstrecke weitere Parameter wie die Signal-Rauschabstände OSNR$^{IN}$ am Eingang der Übertragungsstrecke sowie das sich beim Stand-alone-Betrieb ergebende OSNR$^{PP}$ am Ausgang der Übertragungsstrecke ein. Die beiden letzteren Parameter können selbstverständlich aus Messungen gewonnen werden. Vorteilhaft ist es aber, auf Ergebnisse eines numerischen Planungstools zurückzugreifen.

Im folgenden soll noch ein Spezialfall betrachtet werden. Es wird davon ausgegangen, dass die betrachtete Teilstrecke Teil einer Punkt-zu-Punkt-Verbindung in einem Netzwerk ist, nur Kanäle eingespeist werden, die alle aus derselben Quelle stammen, und alle Kanäle an der selben Stelle terminiert werden. In diesem Fall wird am Ausgang identische Signal-Rauschabstände OSNR$^{OUT}$ für alle Kanäle gefordert. Auch am Eingang besitzen alle Kanäle identische Signal-Rauschabstände OSNR$^{IN}$, da für die vorhergehende Teilstrecke ebenfalls eine Preemphase durchgeführt wird, die gleiche Signal-Rauschabstände OSNR für alle ihrer Ausgangskanäle sicherstellt. In der obenstehenden Gleichung weisen folglich BII und BIII keine Wellenlängenabhängigkeit mehr auf und können durch den Wert 1 ersetzt werden, nachdem ja die Eingangsleistung konstant bleiben soll. Das Ergebnis entspricht demjenigen für eine einzelne Übertragungsstrecke.

Im folgenden wird dargelegt, wie dieses Verfahren noch weiter verbessert und damit die Leistungsfähigkeit von WDM-Netzen und -strecken gesteigert werden kann.

Weitere Ausführungsbeispiele der Erfindung werden im folgenden anhand der Zeichnung näher erläutert.

Dabei zeigen:

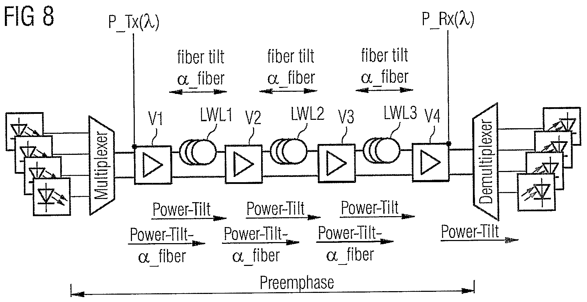

Fig. 8:      Eine Punkt-zu-Punkt-Übertragungsstrecke mit mehreren optischen Verstärkern,

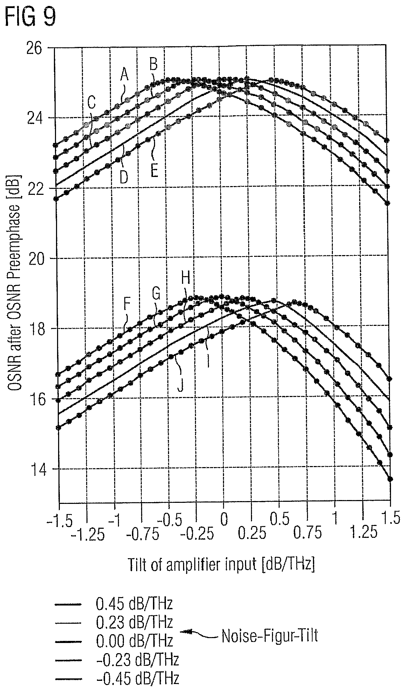

Fig. 9:      Signal-Rauschabstände nach einer Preemphase als Funktion einer Verkippung eines Verstärkereingangs,

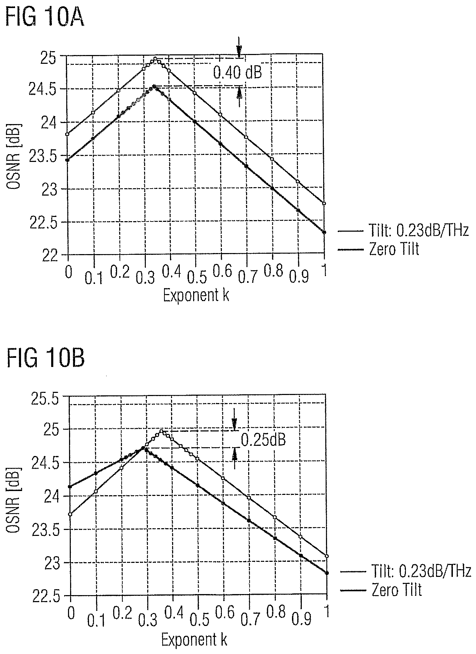

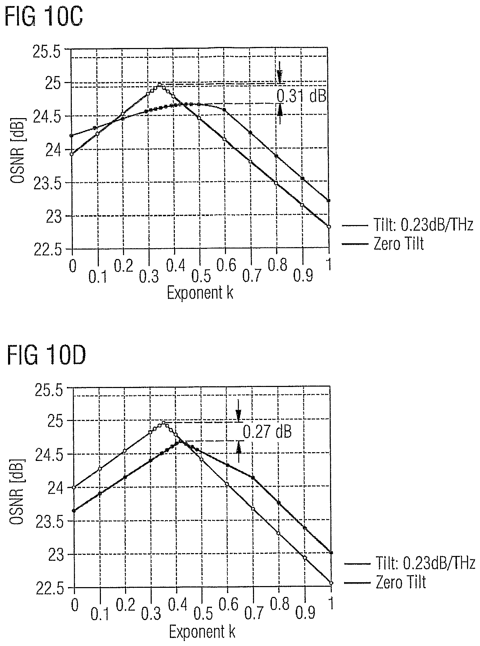

Fig. 10 a, b, c, d:   Signal-Rauschabstände als Funktion des Exponenten k bei unterschiedlichen Verstärkungsgewinnen,

In **Fig. 8** wird eine Punkt-zu-Punkt-Übertragungsstrecke mit mehreren optischen Verstärkern V1, V2, V3, V4, zwischen denen Übertragungsfaser LWL1, LWL2, LWL3 geschaltet sind. Es könnte sich stattdessen um eine Teilstrecke eines optischen Netzes handeln. Ein besonderes Merkmal dieser Übertragungsstrecke ist, dass die verwendeten optischen Verstärker V1, V2, V3, V4 derart angesteuert bzw. geregelt werden können, dass die Steigung des optischen Leistungsspektrums am Ausgang eines jeden Verstärkers V1, V2, V3, V4 einen vorgegebenen Wert aufweist.

Eine wichtige Kenngröße des im folgenden beschriebenen Verfahrens ist die Steigung des Leistungsspektrums, die als die Steigung einer Gerade definiert sein kann, die die logarithmische Leistungsverteilung über der Trägerfrequenz im Sinne einer minimalen Summe der Fehlerquadrate annähert (lineare Regression). Diese Steigung wird im folgenden als Power-Tilt bezeichnet und hat die Einheit dB/THz.

Ziel des Verfahrens ist es, durch optimale Einstellung des Power-Tilts am Eingang eines jeden Verstärkers die sich nach Durchführung einer Preemphase ergebenden Signal-Rauschabstände OSNR zu optimieren. In **Fig. 9** sind die Signal-Rauschabstände OSNR - in dB - nach einer Preemphase als Funktion einer Verkippung eines Verstärkereingangs als Power-Tilt - Tilt of amplifier input in dB/THz - dargestellt.

Wie Figur 9 zeigt, gibt es für jede Steigung NOISE_FIGUR_Tilt einer Rauschzahlkurve A, B, C, D, E bzw. F, G, H, I, J (0,45 dB/THz, 0,23 dB/THz, 0,00 dB/THz, -0,23 dB/THz, -0,45 dB/THz), die im übrigen als identisch für alle Verstärker V1, V2, V3, V4 innerhalb des Preemphase-Abschnitts angenommen wurde, genau einen Power-Tilt-Wert am Eingang der Verstärker V1, V2, V3, V4, der zu einem optimalen Ergebnis führt. Ferner fällt auf, dass das Optimum bei kleiner Anzahl an Streckenabschnitten (z.B. V1, LWL1, V2) dem Tilt der Rauschzahl entspricht (siehe obere Kurven A, B, C, D, E für 5 Übertragungsabschnitte). Bei größerer Anzahl an Streckenabschnitten (siehe untere Kurven für 20 Übertragungsabschnitte) verschieben sich die Maxima zu größeren Tilt-Werten. Im folgenden wird beschrieben, wie dieser optimale Power-Tilt-Wert bestimmt werden kann und wie diese Optimierung mit dem Verfahren der Preemphase der bisherigen Signal-Rauschabstände OSNR und der Preemphase mit Power-Tilt verbunden werden kann.

Bei Verwendung der bisherigen Preemphase der Signal-Rauschabstände OSNR werden in einem ersten Schritt die z. B. als Erbium-dotierte Faserverstärker (EDFA = erbium doped fiber amplifier) vorgesehenen Verstärker V1, V2, V3, V4 so eingestellt, dass der Power-Tilt am Eingang des jeweils nachfolgenden V2, V3, V4 und am Ausgang des Vorverstärkers V4 am Streckenende verschwindet (Power-Tilt soll null sein). Daraufhin werden die Signal-Rauschabstände OSNR des Ausgangsspektrums bestimmt. Wird nun der Power-Tilt an den Eingängen der Verstärker V1, V2, V3, V4 so eingestellt, dass er dem negativen Tilt der im logarithmischen Maßstab angegebenen Signal-Rauschabstände OSNR entspricht, wird die nachfolgend durchgeführte Preemphase der Signal-Rauschabstände OSNR zu einem optimalen Ergebnis führen.

Die Preemphase mit Power-Tilt bietet im Vergleich zur bisherigen Preemphase den Vorteil einer deutlich reduzierten Durchführungszeit und kann auch in Systemen und Netzen eingesetzt werden, in denen eine Messung der Signal-Rauschabstände OSNR nach dem derzeitigen Stand der Technik nicht möglich ist. Da die Signal-Rauschabstände OSNR in diesem Fall nicht bekannt sind, muss der optimale Wert des Power-Tilts auf andere Art und Weise bestimmt werden. Dazu wird wie folgt vorgegangen:

In einem ersten Schritt werden - wie schon bei der bisherigen Preemphase - die Verstärker V1, V2, V3, V4 so eingestellt, dass der Power-Tilt am Eingang des jeweils nachfolgenden Verstärkers V2, V3, V4 und am Ausgang des Vorverstärkers V4 am Streckenende verschwindet (Power-Tilt soll null sein). Aus den am Eingang des Boosters V1 und am Ausgang des Vorverstärkers V4 gemessenen linearen Leistungsspektren P_Tx($\lambda$), P_Rx($\lambda$) eines übertragenen WDM-Signals wird ein Gewinn $G_{link}(\lambda)$ berechnet. Aus dieser Größe kann nach dem bereits in bisher beschriebenen Preemphase mit Power-Tilt das Sollspektrum am Eingang des Boosters V1 bestimmt werden, wobei eine normierte Korrekturfunktion $Q(\lambda)$

$$Q(\lambda) \;=\; \frac{G_{link}^{-k}(\lambda)}{\left\langle G_{link}^{-k}(\lambda)\right\rangle} \quad \text{mit}\quad G_{link}(\lambda) \;=\; \frac{P\_RX(\lambda)}{P\_TX(\lambda)}$$

Verwendung findet. Der Faktor k wurde zuvor von einem Planungstool bestimmt. Alternativ kann auch bei äquidistanten Übertragungsabschnitten die Gleichung

$$Q(\lambda) \;=\; \frac{G_{link}(\lambda) \,-\, 1}{G_{link}(\lambda) \,-\, G_{link}^{N(N+1)}(\lambda)}$$

verwendet werden, wobei N für die Anzahl an identischen Übertragungsabschnitten in der gesamten Übertragungsstrecke steht. Der optimale Power-Tilt am Eingang der Verstärker V1, V2, V3, V4 entspricht nun dem Tilt des Produkts aus dieser Größe und der effektiven Rauschzahl $F_{eff}$, wobei der Begriff der effektiven Rauschzahl weiter unten erläutert wird. Näherungsweise können auch der Tilt der Größe $Q(\lambda)$ (in dB/THz) und der Tilt der effektiven Rauschzahl $F_{eff}$ (ebenfalls in dB/THz) zum resultierenden Power-Tilt addiert werden.

Die am Eingang des Boosters V1 einzustellende Leistungsverteilung P_Tx($\lambda$) berechnet sich unter der Bedingung gleichbleibender mittlerer Eingangsleistung $\langle P\_Tx(\lambda)^{Beginn}\rangle$ nun wie folgt:

$$P\_Tx(\lambda) \;=\; \frac{\left\langle P\_Tx(\lambda)^{Beginn}\right\rangle}{\left\langle Q(\lambda) \cdot F_{eff}(\lambda)\right\rangle} \cdot\; Q(\lambda)\cdot F_{eff}(\lambda)$$

Die in dieser Gleichung auftretenden Größen sind im linearen Maßstab einzusetzen. Ein wesentlicher Vorteil der Optimierung wird aus den folgenden Figuren 10a, 10b, 10c, 10d ersichtlich. Dargestellt sind die Signal-Rauschabstände OSNR als Funktion des Exponenten k für eine Übertragungsstrecke mit 5 Übertragungsabschnitten, für den der optimale Wert des Power-Tilts 0,23 dB/THz ist. Bei den einzelnen Ergebnissen in jeder der Figuren 10a, 10b, 10c, 10d wurden unterschiedliche Gewinnprofile angenommen. Für die Anwendbarkeit des Verfahrens stellt die Tatsache, dass der optimale Wert des Exponenten k nahezu unabhängig vom Gewinnprofil der Verstärker ist, wenn der Power-Tilt den optimalen Wert annimmt, eine bedeutende Verbesserung im Vergleich zu einer Regelung auf verschwindenden Power-Tilt dar, bei der deutliche Unterschiede beobachtet werden.

Die effektive Rauschzahl $F_{eff}$ wird am besten von einem Planungstool berechnet, das typische Werte für den Gewinnverlauf $G_k(\lambda)$ und die Rauschzahl $F_k(\lambda)$ der einzelnen Verstärker V1, V2, ... kennt. Mit den Streckendämpfungen $a_k(\lambda)$ ergibt sich nun für N Übertragungsstrecke LWL1, LWL2,... und (N+1) Verstärker V1, V2, ... die effektive Rauschzahl $F_{eff}(\lambda)$ zu

$$F_{eff}(\lambda) \;=\; \frac{\sum_{K=0}^{N} F_k(\lambda) \cdot G_k(\lambda) \cdot \prod_{j=k+1}^{N} a_j(\lambda) \cdot G_j(\lambda)}{\sum_{K=0}^{N} G_k(\lambda) \cdot \prod_{j=K+1}^{N} a_j(\lambda) \cdot G_j(\lambda)}$$

Sämtliche in dieser Gleichung auftretende Größen sind prinzipiell wellenlängenabhängig ($\lambda$). Sollte die Wel-

lenlängenabhängigkeit jedoch nicht bekannt sein, kann auch mit approximierten Größen gearbeitet werden.

Bei identischen Verstärkern V1, V2, ... entspricht die effektive Rauschzahl $F_{eff}(\lambda)$ der Rauschzahl eines einzelnen Verstärkers z. B. V1.

Zur Realisierung: Alternativ kann anstelle einer Messung des Leistungsspektrums am Eingang des Boosters V1 auch eine Messung an dessen Ausgang erfolgen und eine entsprechende Berechnung der benötigten Booster-Ausgangs- und Eingangsleistungen erfolgen.

Zusammengefasst wird das Verfahren derart verbessert, daß zusätzlich am Eingang eines jeden Verstärkers V1, V2, ... ein optimaler Tilt (genannt Power Tilt) aufgeprägt wird. Bei kleiner Anzahl an Streckenabschnitten LWL1, LWL2, ... entspricht der aufzuprägende Tilt exakt dem Tilt der Rauschzahl des Verstärkers.

**Patentansprüche**

1. Verfahren zur Preemphase eines optischen Multiplexsignals OS, das mehrere Signale mit unterschiedlichen Wellenlängen aufweist, die von einem Sender zu einem Empfänger übertragen werden, bei dem Leistungen der Signale am Sender eingestellt sowie am Empfänger gemessen werden, wobei sendeseitig derart neue Signalwerte eingestellt werden, so dass am Empfänger Signal-Rauschabstände aller Signale annähernd ausgeglichen werden, **dadurch gekennzeichnet, dass**

   - eine mittlere Leistung für die sendeseitigen Signale ermittelt wird, und
   - die neuen Signalwerte aus den aktuellen Leistungen der Signale am Sender und am Empfänger und der mittleren Leistung ermittelt und sendeseitig eingestellt werden, wobei die neu einzustellende Leistung $P_{IN}(\lambda)\_new$ eines der Signale am Sender wie folgt errechnet wird:

   $$P_{IN}(\lambda) \_ new := < P_{IN} > \cdot \frac{Q(\lambda)}{<Q(\lambda)>} \ \{in\ mW\}$$

   wobei $< P_{IN} >$ die mittlere Leistung eines Signals am Sender bezeichnet und $\frac{Q(\lambda)}{<Q(\lambda)>}$ eine normierte Funktion ist, deren Berechnung auf den aktuell ermittelten Leistungen $P_{IN}(\lambda)$ eines Signals am Sender und den aktuell gemessenen Leistungen $P_{OUT}(\lambda)$ eines Signals am Empfänger, oder einer daraus abgeleiteten Größe, insbesondere dem Gesamtgewinn $G_{LINK}$ eines Kanals, basiert, nicht aber auf Messungen von Signal-Rauschabständen oder Rauschleistungen.

2. Verfahren nach Anspruch 1, **dadurch gekennzeichnet, dass** bei der Neueinstellung der Signale am Sender spektrale Einflüsse der Übertragungsstrecke zwischen dem Sender und dem Empfänger, vorzugsweise aufgrund Verstärkung, Rauscheinflüssen, Dämpfungen, berücksichtigt werden.

3. Verfahren nach einem der vorhergehenden Ansprüche, **dadurch gekennzeichnet, dass** bei einer optischen Übertragung über N+1 in Reihe geschalteten optischen Verstärkern mit ähnlichen Verstärkungseigenschaften und über N den Verstärkern zwischengeschalteten Übertragungsabschnitten die normierte Funktion wie folgt definiert ist:

   $$\frac{Q(\lambda)}{<Q(\lambda)>} = K \ \frac{f(\lambda)}{\lambda} \cdot \frac{1}{N+1} \cdot \frac{G_{LINK}-1}{G_{LINK}^{\frac{N}{N+1}} \cdot \left[ G_{LINK}^{\frac{1}{N+1}} - 1 \right]}$$

   mit $G_{LINK}$ als aus den am Sender und Empfänger Signalleistungen ($P_{IN}$, $P_{OUT}$) ermittelter Gesamtgewinn eines Kanals und $f(\lambda)$ als spektrale Rauschzahlfunktion der optischen Verstärker und K als Konstante.

4. Verfahren nach Anspruch 2 oder 3, **dadurch gekennzeichnet, dass** die normierte Funktion

   $$Q(\lambda) / < Q(\lambda) > \text{ durch } 1 / \sqrt{G_{LINK}} \text{ angenähert wird.}$$

5. Verfahren nach Anspruch 1 oder 2, **dadurch gekennzeichnet, dass** die normierten Leistungsspektren der Signale am Sender und am Empfänger zueinander inverse Funktionen bilden.

**6.** Verfahren nach Anspruch 1 oder 2, **dadurch gekennzeichnet, dass** die normierte Funktion mittels folgender Formel berechnet wird:

$$\frac{Q(\lambda)}{<Q(\lambda)>} := \left(\frac{P_{IN}(\lambda)}{P_{OUT}(\lambda)}\right)^k \bigg/ \left\langle\left(\frac{P_{IN}}{P_{OUT}}\right)^k\right\rangle$$

wobei Klammern < ... > eine Mittelung eines Arguments über die Bandbreite ($\Delta\lambda$) der Signale bezeichnet, $P_{IN}(\lambda)$ die aktuell ermittelte Leistung eines Signals am Sender, $P_{OUT}(\lambda)$ die gemessene Leistung eines Signals am Empfänger und k eine Konstante mit 0 < k < 1 bezeichnen.

**7.** Verfahren nach Anspruch 6, **dadurch gekennzeichnet, dass** ein Optimum der Konstante k derart gewählt wird, dass minimale systembedingte Abweichungen der Signal-Rauschabstände auftreten.

**8.** Verfahren nach einem der Ansprüche 6 oder 7, **dadurch gekennzeichnet, dass** die Wahl der Konstante k mittels eines Planungstools vorzugsweise eines Netzwerkmanagements und/oder mittels Messungen von Signal-Rauschabständen erfolgt.

**9.** Verfahren nach einem der vorhergehenden Ansprüche, **dadurch gekennzeichnet, dass** zu Kontrollzwecken Signal-Rauschabstände ausgewählter Signale oder Gruppen von Signalen am Sender und am Empfänger ermittelt werden.

**10.** Verfahren nach einem der vorhergehenden Ansprüche, **dadurch gekennzeichnet, dass** die Sender und Empfänger optische Verstärker enthalten.

**11.** Verfahren nach einem der vorhergehenden Ansprüche, **dadurch gekennzeichnet, dass** die Übertragungsstrecke zwischen dem Sender und dem Empfänger als Teilstrecke eines optischen Netzwerks vorgesehen ist und dass für jede Teilstrecke eine Preemphase durchgeführt wird.

**12.** Verfahren nach einem der vorhergehenden Ansprüche, **dadurch gekennzeichnet, dass** die normierte Funktion mittels folgender Formel berechnet wird:

$$\frac{Q(\lambda)}{<Q(\lambda)>} = \frac{G(\lambda)^{-k}}{\langle G(\lambda)^{-k}\rangle} \cdot \frac{OSNR^{IN}(\lambda)}{OSNR^{PP}} \cdot \frac{h(\lambda)}{OSNR^{IN}(\lambda)\cdot\alpha - h(\lambda)},$$

wobei der Signal-Rauschabstand-Wert $OSNR^{PP}$ für denjenigen konstanten Signal-Rauschabstand steht, der sich beim Stand-alone-Betrieb der Übertragungsstrecke im Netzwerk ergeben würde, und wobei $G(\lambda)$ den wellenlängenabhängigen Gewinn der betrachteten Übertragungsstrecke bezeichnet und wobei $h(\lambda)$ eine gewünschte wellenlängenabhängige Funktion der Signal-Rauschabstände am Ende der Teilstrecke bezeichnet und wobei der Parameter $\alpha$ so zu wählen ist, dass die mittlere Leistung < $P_{IN}$ > der Kanäle am Eingang der Teilstrecke unverändert bleibt und wobei $OSNR^{IN}(\lambda)$ die wellenlängenabhängigen Signal-Rauschabstände am Eingang der Teilstrecke bezeichnet.

**13.** Verfahren nach einem der vorhergehenden Ansprüche, **dadurch gekennzeichnet, dass** volloptische transparente Netze für die Übertragung der Signale verwendet werden.

**14.** Verfahren nach einem der vorhergehenden Ansprüche, **dadurch gekennzeichnet, dass** bei einer DWDM-Übertragung spektrale Abstände zwischen den mit den Signalen belegten Kanälen bei oder beliebig unterhalb 100 GHz gewählt werden.

**15.** Verfahren nach einem der vorhergehenden Ansprüche, **dadurch gekennzeichnet, dass** eine zusätzliche Preemphase der Leistungen der Signale am Sender zur Einstellung von am Empfänger gemessenen Rausch-Signal-Abständen der Signale verwendet wird.

**16.** Verfahren nach einem der vorhergehenden Ansprüche, **dadurch gekennzeichnet, dass** Verkippungen oder nichtlineare Abweichungen des Spektrums der Signal-Rauschabstände kompensiert werden.

**17.** Verfahren nach einem der vorhergehenden Ansprüche, **dadurch gekennzeichnet, dass** bei einer Übertragungsstrecke mit mehreren nachgeschalteten optischen Verstärkern (V1, V2, V3, V4) und Übertragungsfasern (LWL1, LWL2, LWL3) die optischen Verstärker (V1, V2, V3, V4) derart angesteuert bzw. geregelt werden können, dass die Steigung des optischen Leistungsspektrums am Eingang eines jeden Verstärkers (V1, V2, V3, V4) einen vorgegebenen Wert aufweist.

18. Verfahren nach Anspruch 17, **dadurch gekennzeichnet, dass** dieser vorgegebene Wert dem Tilt einer vorbestimmten Rauschzahl entspricht.

**Claims**

1. A method for the pre-emphasis of an optical multiplex signal OS, which comprises a plurality of signals with different wavelengths, which are transmitted by a transmitter to a receiver, wherein powers of the signals are adjusted at the transmitter and measured at the receiver, wherein new signal values are adjusted at the transmitter end, so that signal-to-noise ratios of all the signals are approximately equaled out at the receiver, **characterized in that**

   - an average power is ascertained for the transmitter-end signals, and
   - the new signal values are ascertained from the current powers of the signals at the transmitter and at the receiver and the average power and are adjusted at the transmitter end, wherein newly adjusted power $P_{IN}(\lambda)\_new$ of one of the signals at the transmitter is calculated as follows:

$$P_{IN}(\lambda)\_new := <P_{IN}> \cdot \frac{Q(\lambda)}{<Q(\lambda)>} \quad \{in\ mW\}$$

   wherein $<P_{IN}>$ denotes the average power of a signal at the transmitter and $\frac{Q(\lambda)}{<Q(\lambda)>}$ is a normalized function, the calculation whereof is based on the currently ascertained powers $P_{IN}(\lambda)$ of a signal at the transmitter and the currently measured powers $P_{OUT}(\lambda)$ of a signal at the receiver, or a magnitude derived therefrom, in particular the total gain $G_{LINK}$ of a channel, but not on measurements of signal-to-noise ratios or noise powers.

2. The method according to claim 1, **characterized in that**, in the readjustment of the signals at the transmitter, spectral influences of the transmission path between the transmitter and the receiver, preferably due to amplification, noise influences, damping effects, are taken into account.

3. The method according to any one of the preceding claims, **characterized in that**, in an optical transmission over N+1 optical amplifiers with similar amplification properties connected in series and over N transmission sections interconnected between the amplifiers, the normalized function is defined as follows:

$$\frac{Q(\lambda)}{<Q(\lambda)>} = K \frac{f(\lambda)}{\lambda} \cdot \frac{1}{N+1} \cdot \frac{G_{LINK}-1}{G_{LINK}^{\frac{N}{N+1}} \cdot \left[ G_{LINK}^{\frac{1}{N+1}} - 1 \right]}$$

   with $G_{LINK}$ as the total gain of a channel ascertained from signal powers ($P_{IN}$, $P_{OUT}$) at the transmitter and receiver and $f(\lambda)$ as a spectral noise figure function of the optical amplifier and K as a constant.

4. The method according to claim 2 or 3, **characterized in that** the normalized function $Q(\lambda)/<Q(\lambda)>$ is approximated by $1/\sqrt{G_{LINK}}$.

5. The method according to claim 1 or 2, **characterized in that** the normalized spectra of the signals at the transmitter and at the receiver form inverse functions to one another.

6. The method according to claim 1 or 2, **characterized in that** the normalized function is calculated by means of the following formula:

$$\frac{Q(\lambda)}{<Q(\lambda)>} := \left(\frac{P_{IN}(\lambda)}{P_{OUT}(\lambda)}\right)^k \Bigg/ \left\langle\left(\frac{P_{IN}}{P_{OUT}}\right)^k\right\rangle$$

wherein brackets < ... > denote an averaging of an argument over the bandwidth ($\Delta\lambda$) of the signals, $P_{IN}(\lambda)$ denotes the currently ascertained power of a signal at the transmitter, $P_{OUT}(\lambda)$ the measured power of a signal at the receiver and k a constant with 0 < k < 1.

7. The method according to claim 6, **characterized in that** an optimum of constant k is selected such that minimum system-related deviations of the signal-to-noise ratios occur.

8. The method according to any one of claims 6 or 7, **characterized in that** the selection of constant k takes place by means of a planning tool preferably of a network management and/or by means of measurements of signal-to-noise ratios.

9. The method according to any one of the preceding claims, **characterized in that**, for control purposes, signal-to-noise ratios of selected signals or groups of signals are ascertained at the transmitter and at the receiver.

10. The method according to any one of the preceding claims, **characterized in that** the transmitter and receiver contain optical amplifiers.

11. The method according to any one of the preceding claims, **characterized in that** the transmission path between the transmitter and the receiver is provided as a partial path of an optical network and that a pre-emphasis is carried out for each partial path.

12. The method according to any one of the preceding claims, **characterized in that** the normalized function is calculated by means of the following formula:

$$\frac{Q(\lambda)}{<Q(\lambda)>} = \frac{G(\lambda)^{-k}}{\langle G(\lambda)^{-k}\rangle} \cdot \frac{OSNR^{IN}(\lambda)}{OSNR^{PP}} \cdot \frac{h(\lambda)}{OSNR^{IN}(\lambda)\cdot\alpha - h(\lambda)},$$

wherein the signal-to-noise ratio value $OSNR^{PP}$ stands for the constant signal-to-noise ratio that would arise with the stand-alone operation of the transmission path in the network, and wherein $G(\lambda)$ denotes the wavelength-dependent gain of the transmission path in question and wherein $h(\lambda)$ denotes a desired wavelength-dependent function of the signal-to-noise ratios at the end of the partial path and wherein parameter $\alpha$ is to be selected such that average power $<P_{IN}>$ of the channels at the input of the partial path remains unchanged and wherein $OSNR^{IN}<\lambda>$ denotes the wavelength-dependent signal-to-noise ratios at the input of the partial path.

13. The method according to any one of the preceding claims, **characterized in that** all-optical transparent networks are used for the transmission of the signals.

14. The method according to any one of the preceding claims, **characterized in that**, in a DWDM transmission, spectral distances between the channels occupied with the signals are selected at or arbitrarily below 100 GHz.

15. The method according to any one of the preceding claims, **characterized in that** an additional pre-emphasis of the powers of the signals at the transmitter is used for the adjustment of signal-to-noise ratios of the signals measured at the receiver.

16. The method according to any one of the preceding claims, **characterized in that** tilts or non-linear deviations of the spectrum of the signal-to-noise ratios are compensated for.

17. The method according to any one of the preceding claims, **characterized in that**, in a transmission path with a plurality of downstream optical amplifiers ($V_1$, $V_2$, $V_3$, $V_4$) and transmission fibres ($LWL_1$, $LWL_2$, $LWL_3$), the optical amplifiers ($V_1$, $V_2$, $V_3$, $V_4$) can be controlled or regulated in such a way that the gradient of the optical power spectrum at the input of each amplifier ($V_1$, $V_2$, $V_3$, $V_4$) has a predetermined value.

18. The method according to claim 17, **characterized in that** this predetermined value corresponds to the tilt of a predetermined noise factor.

**Revendications**

1. Procédé de pré-accentuation d'un signal de multiplexage optique OS qui comprend plusieurs signaux avec différentes longueurs d'ondes, qui sont transmis d'un émetteur à un récepteur, dans lequel les puissances des signaux sont réglées au niveau de l'émetteur et mesurées au niveau du récepteur, de nouvelles de valeurs de signaux étant réglées côté émetteur de façon à ce que, au niveau du récepteur, les rapports signal-bruit de tous les signaux soient approximativement compensés, **caractérisé en ce que**

   - une puissance moyenne est déterminée pour les signaux côté émetteur et
   - les nouvelles valeurs de signaux sont déterminées et réglées côté émetteur à partir des puissances actuelles des signaux au niveau de l'émetteur et au niveau du récepteur et de la puissance moyenne, la puissance à régler de nouveau $P_{IN}(\lambda)\_new$ d'un des signaux étant calculée comme suit :

$$P_{IN}(\lambda)\_new := <P_{IN}> \cdot \frac{Q(\lambda)}{<Q(\lambda)>} \{in\ mW\}$$

   $<P_{IN}>$ désignant la puissance moyenne d'un signal au niveau de l'émetteur et $\frac{Q(\lambda)}{<Q(\lambda)>}$ étant une fonction normée dont le calcul est basé sur les puissances $P_{IN}(\lambda)$ d'un signal au niveau de l'émetteur et les puissances actuellement mesurées $P_{OUT}(\lambda)$ d'un signal au niveau du récepteur, ou d'une grandeur dérivée, plus particulièrement le gain total $G_{LINK}$ d'un canal, mais pas sur les mesures de rapports signal-bruit ou des puissances de bruit.

2. Procédé selon la revendication 1, **caractérisé en ce que**, lors du nouveau réglage des signaux au niveau de l'émetteur, les influences spectrales du trajet de transmission entre l'émetteur et le récepteur, de préférence sur la base de l'amplification, d'influences du bruit, d'amortissements, sont prises en compte.

3. Procédé selon l'une des revendications précédentes, **caractérisé en ce que**, lors d'une transmission optique par l'intermédiaire de N+1 amplificateurs optiques branchés en série avec des propriétés d'amplification similaires et par l'intermédiaire de N portions de transmission intercalés entre les amplificateurs, la fonction normée est définie comme suit:

$$\frac{Q(\lambda)}{<Q(\lambda)>} = K\ \frac{f(\lambda)}{\lambda} \cdot \frac{1}{N+1} \cdot \frac{G_{LINK}-1}{G_{LINK}^{\frac{N}{N+1}} \cdot \left[G_{LINK}^{\frac{1}{N+1}} - 1\right]}$$

   $G_{LINK}$ étant le gain total, déterminé à partir des puissances de signaux ($P_{IN}$, $P_{OUT}$) au niveau de l'émetteur et du récepteur, d'un canal et $f(\lambda)n$ étant une fonction de facteur bruit spectrale des amplificateurs optiques et K étant une constante.

4. Procédé selon la revendication 2 ou 3, **caractérisé en ce que** la fonction normée $Q(\lambda) / <Q(\lambda)>$ est approximée par $1 / \sqrt{G_{LINK}}$ 1

5. Procédé selon la revendication 1 ou 2, **caractérisé en ce que** les spectres de puissances normés des signaux au niveau de l'émetteur et au niveau du récepteur constituent des fonctions inverses entre elles.

6. Procédé selon la revendication 1 ou 2, **caractérisé en ce que** la fonction normée est calculée au moyen de la formule suivante :

$$\frac{Q(\lambda)}{<Q(\lambda)>} := \left(\frac{P_{IN}(\lambda)}{P_{OUT}(\lambda)}\right)^k \Big/ \langle\left(\frac{P_{IN}}{P_{OUT}}\right)^k\rangle$$

les guillemets <...> désignant une moyenne d'un argument sur la largeur de bande ($\Delta\lambda$) des signaux, $P_{IN}(\lambda)$ désignant la puissance actuellement déterminée d'un signal au niveau de l'émetteur, $P_{OUT}(\lambda)$ désignant la puissance mesurée d'un signal au niveau du récepteur et k désignant une constante avec 0 < k < 1.

7. Procédé selon la revendication 6, **caractérisé en ce qu'**un optimum de la constante k est choisi de façon à ce que des écarts minimaux, dus au système, des rapports signal-bruit apparaissent.

8. Procédé selon l'une des revendications 6 ou 7, **caractérisé en ce que** le choix de la constante k est effectué au moyen d'un outil de planification de préférence d'une gestion de réseau et/ou au moyen de mesures des rapports signal-bruit.

9. Procédé selon l'une des revendications précédentes, **caractérisé en ce que**, pour le contrôle des rapports signal-bruit des signaux ou de groupes des signaux sélectionnés sont déterminés au niveau de l'émetteur et au niveau du récepteur.

10. Procédé selon l'une des revendications précédentes, **caractérisé en ce que** les émetteurs et les récepteurs contiennent des amplificateurs optiques.

11. Procédé selon l'une des revendications précédentes, **caractérisé en ce que** le trajet de transmission entre l'émetteur et le récepteur est conçu comme un trajet partiel d'un réseau optique et **en ce que**, pour chaque trajet partiel, une pré-accentuation est effectuée.

12. Procédé selon l'une des revendications précédentes, **caractérisé en ce que** la fonction normée est calculée au moyen de la formule suivante :

$$\frac{Q(\lambda)}{<Q(\lambda)>} = \frac{G(\lambda)^{-k}}{\langle G(\lambda)^{-k}\rangle} \cdot \frac{OSNR^{IN}(\lambda)}{OSNR^{PP}} \cdot \frac{h(\lambda)}{OSNR^{IN}(\lambda) \cdot \alpha - h(\lambda)},$$

la valeur du rapport signal-bruit $OSNR^{PP}$ étant celui du rapport signal-bruit constant qui résulterait pour le fonctionnement autonome du trajet de transmission dans le réseau, et $G(\lambda)$ désignant le gain, en fonction de la longueur d'onde, du trajet de transmission considéré et $h(\lambda)$ désignant une fonction souhaitée, dépendant de la longueur d'onde, des rapports signal-bruit à la fin du trajet partiel et le paramètre $\alpha$ devant être choisi de façon à ce que la puissance moyenne $<P_{IN}>$ des canaux à l'entrée du trajet partiel reste inchangée et $OSNR^{IN}(\lambda)$ désignant les rapports signal-bruit en fonction de la longueur d'onde à l'entrée du trajet partiel.

13. Procédé selon l'une des revendications précédentes, **caractérisé en ce que** des réseaux transparents entièrement optiques sont utilisés pour la transmission des signaux.

14. Procédé selon l'une des revendications précédentes, **caractérisé en ce que**, dans une transmission DWDM, les distances spectrales entre les canaux occupés avec les signaux sont choisies à 100 GHz ou à une valeur quelconque en dessous.

15. Procédé selon l'une des revendications précédentes, **caractérisé en ce qu'**une pré-accentuation supplémentaire des puissances des signaux au niveau de l'émetteur est utilisée pour le réglage de rapports signal-bruit des signaux mesurés au niveau du récepteur.

16. Procédé selon l'une des revendications précédentes, **caractérisé en ce que** des basculements ou des écarts non linéaires du spectre des rapports signal-bruit sont compensés.

17. Procédé selon l'une des revendications précédentes, **caractérisé en ce que**, dans un trajet de transmission avec plusieurs amplificateurs optiques (V1, V2, V3, V4) et fibres de transmission (LWL1, LWL2, LWL3) branchés successivement, les amplificateurs optiques (V1, V2, V3, V4) peuvent être contrôlés ou régulés de façon à ce que l'augmentation du spectre de puissance optique à l'entrée de chaque amplificateur (V1, V2, V3, V4) présente une valeur prédéterminée.

18. Procédé selon la revendication 17, **caractérisé en ce que** cette valeur prédéterminée correspond au basculement d'un facteur de bruit prédéterminé.

FIG 1

FIG 2

FIG 3

OTT Tx

LWL 1    LWL 2                LWLN+1    OTT Rx

OLR 1     OLR 2        OLR N

M1, R1                              M2

FIG 4

5 spans

FIG 5

10 spans

# FIG 6

# FIG 7

FIG 8

P_Tx(λ)

P_Rx(λ)

Multiplexer

Demultiplexer

V1 — LWL1 V2 — LWL2 V3 — LWL3 V4

fiber tilt α_fiber

fiber tilt α_fiber

fiber tilt α_fiber

Power-Tilt
Power-Tilt-α_fiber

Power-Tilt
Power-Tilt-α_fiber

Power-Tilt
Power-Tilt-α_fiber

Power-Tilt

Preemphase

## FIG 9

## FIG 10A

Tilt: 0.23dB/THz
Zero Tilt

## FIG 10B

Tilt: 0.23dB/THz
Zero Tilt

FIG 10C

FIG 10D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19848989
- EP 1130803 A2
- EP 0543570 A2

**In der Beschreibung aufgeführte Nicht-Patentliteratur**

- **A. R. CHRAPLYLY ; J. A. NAGEL ; R. W. TKACH.** Equalization in Amplifier WDM Lightwave Transmission Systems. *IEEE Photonics Technology Letters,* August 1992, vol. 4 (8), 920-922